# EUROPÄISCHE PATENTSCHRIFT

(11) **EP 2 119 519 B1**
(45) Veröffentlichungstag und Bekanntmachung des Hinweises auf die Patenterteilung: **15.09.2010**
(21) Anmeldenummer: 09158419.3
(22) Anmeldetag: 22.04.2009
(51) Int. Cl.: B23B 31/26, B23B 31/30, B23Q 3/06

(54) **Spannkopf**
Chuck head
Tête de serrage

(30) Priorität: 07.05.2008 DE 102008022826
(43) Veröffentlichungstag der Anmeldung: 18.11.2009
(73) Patentinhaber: Röhm GmbH, 89567 Sontheim (DE)
(72) Erfinder: Hangleiter, Eugen, 89568 Hermaringen (DE)
(74) Vertreter: Hentrich, Swen

(56) Entgegenhaltungen:
- CH-A5- 691 042
- DE-A1- 10 153 097

## Beschreibung

Die Erfindung betrifft einen Spannkopf mit einem Futterkörper, in dem in einer Kolbenkammer ein auf ein Spannstück einwirkender Lösekolben, in einer Federaufnahme mindestens eine auf den Lösekolben einwirkende Spannfeder und in einer Werkzeugaufnahme eine durch das Spannstück betätigbare Segmentspannzange mit mindestens zwei Zangenbacken angeordnet sind.

Ein derartiger Spannkopf ist aus der Praxis bekannt, der insbesondere bei der Spannung von Paletten Anwendung findet. Bei dieser Palettenspannung ist auf der Unterseite der Palette ein Anzugsbolzen ausgebildet, der zum Spannen der Palette zwischen die Zangenbacken der Segmentspannzange eingeführt wird, die dazu durch den Lösekolben in Offenstellung gehalten werden muss, so dass eine entsprechende Druckbeaufschlagung des Lösekolbens in der Kolbenkammer erforderlich ist. Ist der Anzugsbolzen zwischen die Zangenbacken eingeführt, muss aktiv die Spannung durch Abschalten des Lösedruckes aktiviert werden, so dass die Spannfeder die Verstellung des Lösekolbens mit dem Spannstück bewirken und so das Schließen der Segmentspannzange erfolgen kann. Ein vergleichbaren Spannkopf, der den Oberbegriff von Anspruch 1 bildet, ist aus DE 101 53 047 bekannt.

Der Erfindung liegt die Aufgabe zugrunde, einen Spannkopf der eingangs genannten Art so auszubilden, dass die Bedienung des Spannkopfes vereinfacht und die Sicherheit der Spannung erhöht wird.

Diese Aufgabe wird bei einem Spannkopf der eingangs genannten Art dadurch gelöst, dass in einer koaxial zur Achse des Futterkörpers orientierten Führungsaufnahme des Spannstücks ein Verschlußdeckel axial verstellbar gelagert ist, der von der Kraft einer mittelbar oder unmittelbar an dem Spannstück abgestützten Feder beaufschlagt wird und einen Deckelkopf aufweist, der in der Lösestellung der Segmentspannzange die Zangenbacken in der Offenstellung blockiert.

Durch diese erfindungsgemäße Gestaltung des Spannkopfes ergibt sich der Vorteil, dass mittels des Deckelkopfes des Verschlussdeckel die Zangenbacken geöffnet für das Einschieben des Einzugbolzens bereitstehen, ohne dass es dazu einer Beaufschlagung des Lösekolbens bedarf, der tatsächlich nur noch zum Lösen benötigt wird, so dass auch nur noch im Stillstand des in der Regel an einer Antriebsspindel einer Werkzeugmaschine montierten Spannkopfes eine Druckbeaufschlagung erforderlich ist; eine Überführung des Durckmittels in ein rotierendes Bauteil während des Betriebs ist damit nicht erforderlich, so dass sich insoweit auch eine Vereinfachung der Dichtungsanforderungen ergibt.

Als günstig hat es sich weiterhin gezeigt, wenn der Deckelkopf an seiner rückwärtigen, dem Werkzeug abgewandten Seite eine Hohlstange aufweist, in der die Feder angeordnet ist, so dass in einfacher Weise die Feder zur Anlage an dem Bauteil gebracht werden kann, an dem der Verschlußdeckel sich abstützt, ohne dabei die Funktionsweise der Segmentspannzange zu behindern oder das Ansetzen des Anzugsbolzen zu stören.

Als günstig hat es sich weiterhin erwiesen, wenn der Deckelkopf als Zylinder gestaltet ist und auf seiner Umfangsfläche eine Gleitfläche für die Zangenbacken aufweist, da mit dieser Gestaltung die Zangenbacken bei dem Einführen des Anzugsbolzens in einfacher Weise über die Umfangsfläche des Zylinders sowie den Bolzenbund des Anzugsbolzens gleiten können, bis die Zangenbacken den Bolzenbund hintergreifen.

Dem Einbringen von Schmutz wirkt entgegen, dass die Werkzeugaufnahme an der dem Werkzeug zugewandten Seite einen Dichtungsring mit einer zentralen Öffnung aufweist, die in der Lösestellung durch den eine Anlagefläche für das Werkzeug aufweisenden Deckelkopf verschlossen ist. Außerdem ermöglicht dies, den Staudruck der Reinigungs- und Blasluft auszuwerten, um so Informationen über die Spannstellung zu erhalten und diese Information in der Maschinensteuerung zu verwerten.

Prinzipiell besteht die Möglichkeit, die Feder zwischen dem Verschlussdeckel und dem Spannstück oder dem Lösekolben anzuordnen, wobei eine vergrößerte Einbaulänge zur Verfügung steht, wenn die Feder an einem Kolbenbund des Lösekolbens abgestützt ist.

Der Futterkörper weist die Außenkontur eines Kegels auf, so dass durch den Spannvorgang beim Einsetzen des Einzugsbolzens zwischen die Zangenbacken der Segmentspannzange zugleich eine Zentrierung erfolgt.

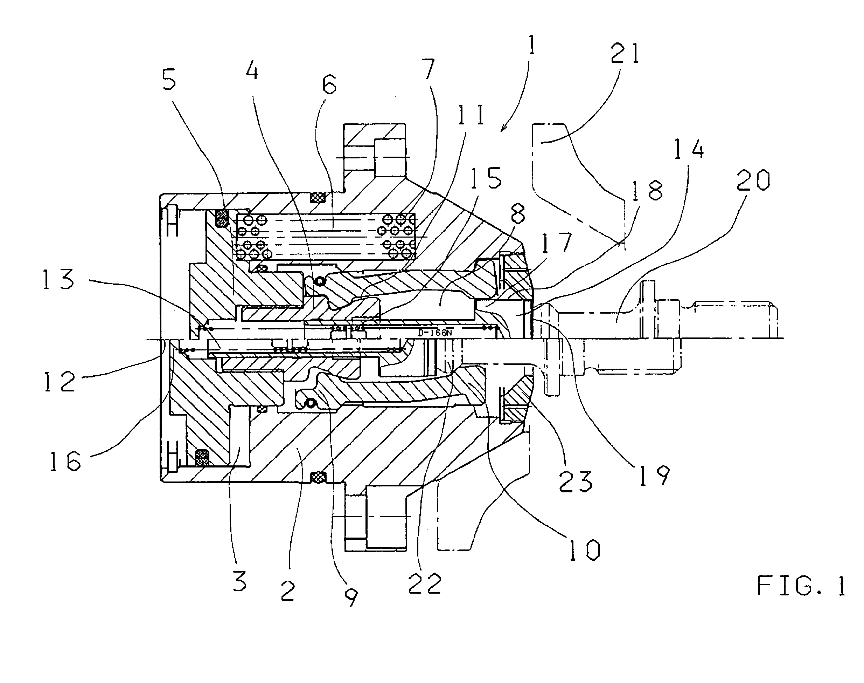

Im folgenden wird die Erfindung an einem in der Zeichnung dargestellten Ausführungsbeispiel näher erläutert; es zeigen
- Fig. 1: einen Längsschnitt durch einen erfindungsgemäßen Spannkopf, in der oberen Hälfte in der Offenstellung, in der unteren Hälfte in der Spannstellung gezeigt,

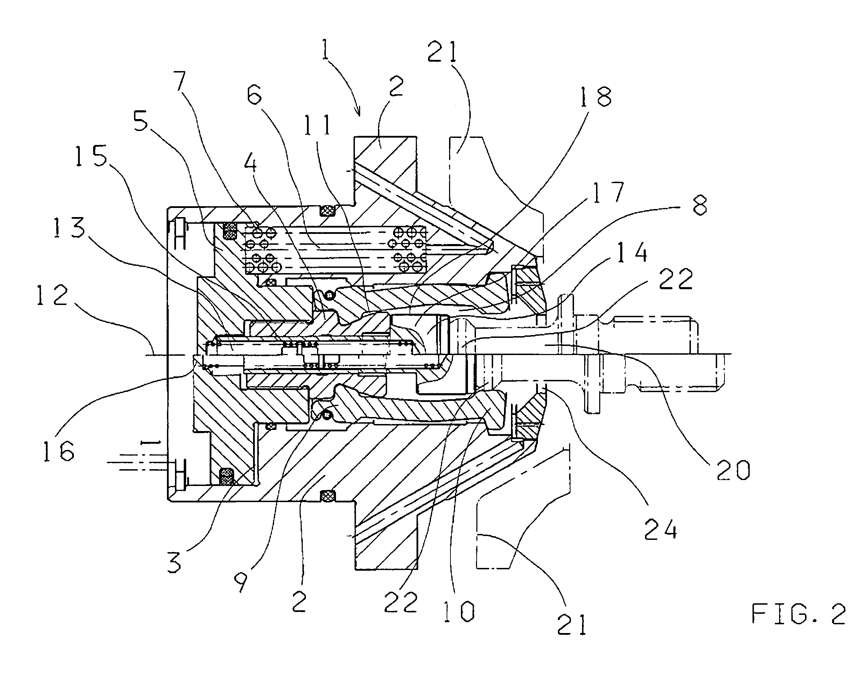

- Fig. 2: einen Längsschnitt durch einen erfindungsgemäßen Spannkopf, in der oberen Hälfte in der Offenstellung zum Entfernen des Anzugsbolzens, in der unteren Stellung während des Einlegens des Anzugsbolzens gezeigt, und

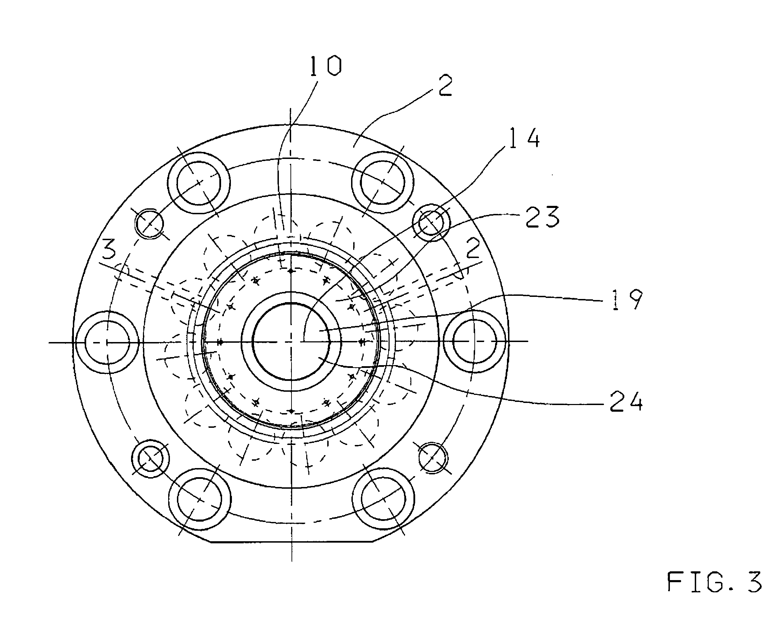

- Fig. 3: eine Stirnansicht des erfindungsgemäßen Spannkopfes.

In der Zeichnung ist ein Spannkopf 1 dargestellt, der einen Futterkörper 2 aufweist, in dem in einer Kolbenkammer 3 ein auf ein Spannstück 4 einwirkender Lösekolben 5 angeordnet ist. Darüber hinaus ist in dem Futterkörper 2 in einer Federaufnahme 6 bei dem in der Zeichnung dargestellten Ausführungsbeispiel eine auf den Lösekolben 5 einwirkende Spannfeder 7 und in einer Werkzeugaufnahme 8 eine durch das Spannstück 4 betätigbare Segmentspannzange 9 mit mindestens zwei Zangenbacken 10 angeordnet. Das Spannstück 4 weist in üblicher und daher nicht detailliert zu beschreibender Weise eine kegelartige Steuerfläche 11 auf, die auf das eine axiale Ende der Zangenbacken 10 einwirkt, um diese zwischen der Offenstellung, bei dem das andere Ende der Zangenbacken 10 radial nach außen verstellt ist, und der Spannstellung zu verstellen und durch die geeignete Neigung der aneinander liegenden Flächen von dem Spannstück 4, der Zangenbacken 10, des Futterkörpers 2 sowie des Werkzeugs die Spannkraft zu verstärken. In einer koaxial zur Achse 12 des Futterkörpers 2 orientierten Führungsaufnahme 13 des Spannstücks 4 ist ein Verschlussdeckel 14 axial verstellbar gelagert, der von der Kraft einer mittelbar oder unmittelbar an dem Spannstück 4 abgestützten Feder 15 beaufschlagt wird; in dem gezeigten Ausführungsbeispiel ist die Feder 15 an einem Kolbenbund 16 des Lösekolbens 5 abgestützt, der mit dem Spannstück 4 verbunden ist. Der Verschlussdeckel 14 weist einen Deckelkopf 17 auf, der Zylindergestalt hat ist und auf seiner Umfangsfläche eine Gleitfläche 18 für die Zangenbacken 10 und an der Stirnseite eine Anlagefläche 19 für das Werkzeug aufweist. In der Lösestellung der Segmentspannzange 9 sind die Zangenbacken 10 in der Offenstellung durch Anlage an der Gleitfläche 18 des Deckelkopfes 17 blockiert, so dass in einfacher Weise ein Werkzeug, insbesondere ein Anzugsbolzen 20 einer Palette 21 in die Werkzeugaufnahme 8 eingeführt werden kann und dabei den Verschlussdeckel 14 axial nach hinten verschiebt, wobei die Zangenbacken 10 an der Gleitfläche 18 des Deckelkopfes 17 sowie an dem Bolzenbund 22 des Anzugsbolzens 20 entlanggleiten, bis die Zangenbacken 10 den Bolzenbund 22 hintergreifen können. In folge der Federwirkung der in der Federaufnahme 6 angeordneten Spannfeder 7 wird der Lösekolben 5 und damit das Spannstück 4 axial nach hinten verstellt, so dass die volle Spannkraft aufgebracht wird; zu beachten ist allerdings, dass die Funktion der Spannung automatisch mit dem Zuführen des Anzugsbolzens 20 ausgelöst wird und eine Druckbeaufschlagung des Lösekolbens 5 nur noch erforderlich ist, wenn das Werkzeug bzw. der Anzugsbolzen 20 wieder ausgespannt werden soll, während im Stand der Technik eine Druckbeaufschlagung des Lösekolbens 5 auch erforderlich war, um die Zangenbacken 10 in der Lösestellung der Segmentspannzangen 9 in der Offenstellung bereitzusteilen.

Die Zeichnung lässt weiterhin erkennen, dass die Werkzeugaufnahme 8 an der dem Werkzeug zugewandten Seite einen Dichtungsring 23 mit einer zentralen Öffnung 24 aufweist, die in der Lösestellung durch den die Anlagefläche 19 für das Werkzeug aufweisenden Deckelkopf 17 verschlossen ist. Der Futterkörper 2 selber weist die Außenkontur eines Kegels auf, um dessen besondere Eignung für die Palettenspannung zu erhöhen, da durch diese Formgebung bei dem Aufsetzen der entsprechend konturierten Aufnahme der Palette eine selbsttätige Zentrierung erfolgt.

## Patentansprüche

1. Spannkopf mit einem Futterkörper (2), in dem in einer Kolbenkammer (3) ein auf ein Spannstück (4) einwirkender Lösekolben (5), in einer Federaufnahme (6) mindestens eine auf den Lösekolben (5) einwirkende Spannfeder (7) und in einer Werkzeugaufnahme (8) eine durch das Spannstück (4) betätigbare Segmentspannzange (9) mit mindestens zwei Zangenbacken (10) angeordnet sind, **dadurch gekennzeichnet, dass** in einer koaxial zur Achse (12) des Futterkörpers (2) orientierten Führungsaufnahme (13) des Spannstücks (4) ein Verschlußdeckel (14) axial verstellbar gelagert ist, der von der Kraft einer mittelbar oder unmittelbar an dem Spannstück (4) abgestützten Feder (15) beaufschlagt wird und einen Deckelkopf (17) aufweist, der in der Lösestellung der Segmentspannzange (9) die Zangenbacken (10) in der Offenstellung blockiert.

2. Spannkopf nach Anspruch 1, **dadurch gekennzeichnet, dass** der Deckelkopf (17) an seiner rückwärtigen, dem Werkzeug abgewandten Seite eine Hohlstange aufweist, in der die Feder (15) angeordnet ist.

3. Spannkopf nach Anspruch 1 oder 2, **dadurch gekennzeichnet, dass** der Deckelkopf (17) als Zylinder gestaltet ist und auf seiner Umfangsfläche eine Gleitfläche (18) für die Zangenbacken (10) aufweist.

4. Spannkopf nach einem der Ansprüche 1 bis 3, **dadurch gekennzeichnet, dass** die Werkzeugaufnahme (8) an der dem Werkzeug zugewandten Seite einen Dichtungsring (23) mit einer zentralen Öffnung (24) aufweist, die in der Lösestellung durch den eine Anlagefläche (19) für das Werkzeug aufweisenden Deckelkopf (17) verschlossen ist.

5. Spannkopf nach einem der Ansprüche 1 bis 4, **dadurch gekennzeichnet, dass** die Feder (15) an einem Kolbenbund (16) des Lösekolbens (5) abgestützt ist.

6. Spannkopf nach einem der Ansprüche 1 bis 5, **dadurch gekennzeichnet, dass** der Futterkörper (2) die Aussenkontur eines Kegels aufweist.

## Claims

1. A clamping head comprising a chuck body (2) in which a release piston (5) acting on a clamping portion (4) is arranged in a piston chamber (3), at least one clamping spring (7) acting on the release piston (5) is arranged in a spring receiving means (6) and a segment collet (9) which is actuable by the clamping portion (4) and which has at least two collet jaws (10) is arranged in a tool receiving means (8), **characterised in that** axially displaceably mounted in a guide receiving means (13) of the clamping portion (4), that is oriented in coaxial relationship with the axis (12) of the chuck body (2), is a closure cover (14) which is acted upon by the force of a spring (15) supported directly or indirectly against the clamping portion (4) and has a cover head (17) which in the release position of the segment collet (9) blocks the collet jaws (10) in the open position.

2. A clamping head according to claim 1 **characterised in that** at its rearward side remote from the tool the cover head (17) has a hollow bar in which the spring (15) is arranged.

3. A clamping head according to claim 1 or claim 2 **characterised in that** the cover head (17) is in the form of a cylinder and on its peripheral surface has a sliding surface (18) for the collet jaws (10).

4. A clamping head according to one of claims 1 to 3 **characterised in that** the tool receiving means (8) at the side towards the tool has a sealing ring (23) having a central opening (24) which in the release position is closed by the cover head (17) having a contact surface (19) for the tool.

5. A clamping head according to one of claims 1 to 4 **characterised in that** the spring (15) is supported against a collar (16) on the release piston (5).

6. A clamping head according to one of claims 1 to 5 **characterised in that** the chuck body (2) has the outside contour of a cone.

## Revendications

1. Tête de serrage comprenant un corps de mandrin (2) dans lequel se trouvent une chambre de piston (3) contenant un piston de libération (5) agissant sur une pièce de serrage (4), un logement de piston (6) qui accueille au moins un ressort de serrage (7) agissant sur le piston de dégagement (5), un logement d'outil (8) qui accueille une pince segmentaire de serrage (9) actionnable par la pièce de serrage (4) et présentant au moins deux mâchoires de serrage (10), cette tête de serrage étant **caractérisée en ce que**, dans un logement de guidage (13) de la pièce de serrage (4), coaxial au corps de mandrin (2), peut coulisser axialement un couvercle de fermeture (14) actionné par la force d'un ressort (15) s'appuyant directement ou indirectement sur la pièce de serrage (4) et présentant une tête de couvercle (17) qui, en position de libération de la pince segmentaire de serrage (9), bloque les mâchoires de serrage (10) en position d'ouverture.

2. Tête de serrage selon la revendication 1, **caractérisée en ce que** la tête de couvercle (17), sur son côté arrière situé à l'opposé de l'outil, présente une tige creuse dans laquelle est monté le ressort (15).

3. Tête de serrage selon la revendication 1 ou 2, **caractérisée en ce que** la tête de couvercle (17) est cylindrique et présente, sur sa périphérie, une portée de glissement (18) pour les mâchoires de serrage (10).

4. Tête de serrage selon une des revendications 1 à 3, **caractérisée en ce que** le logement d'outil (8) présente, du côté en regard de l'outil, une bague d'étanchéité (23) avec une ouverture centrale (24) qui, en position de libération, est fermée par la tête de couvercle (17) qui présente une portée d'appui (19) pour l'outil.

5. Tête de serrage selon une des revendications 1 à 4, **caractérisée en ce que** le ressort (15) est en appui sur un collet de piston (16) du piston de libération (5).

6. Tête de serrage selon une des revendications 1 à 5, **caractérisée en ce que** le corps de mandrin (2) a son contour externe en forme de cône.
